Europäisches Patentamt

European Patent Office

Office européen des brevets

(11) Veröffentlichungsnummer: **0 296 417 B1**

(12) **EUROPÄISCHE PATENTSCHRIFT**

(45) Veröffentlichungstag der Patentschrift: **21.10.92**

(51) Int. Cl.5: **G01N 27/90**

(21) Anmeldenummer: **88109242.3**

(22) Anmeldetag: **10.06.88**

(54) **Verfahren zum Untersuchen eines Objektes.**

(30) Priorität: **23.06.87 DE 3720686**

(43) Veröffentlichungstag der Anmeldung:
**28.12.88 Patentblatt 88/52**

(45) Bekanntmachung des Hinweises auf die
Patenterteilung:
**21.10.92 Patentblatt 92/43**

(84) Benannte Vertragsstaaten:
**DE FR GB IT SE**

(56) Entgegenhaltungen:
**EP-A- 0 224 230**
**DE-A- 3 207 569**
**DE-A- 3 612 470**

**PATENT ABSTRACTS OF JAPAN, Band 6, Nr. 225 (P-154)[1103], 10. November 1982; & JP-A-57 128 842 (SUMITOMO KINZOKU KOGYO K.K.) 10-08-1982**

**PATENT ABSTRACTS OF JAPAN, Band 7, Nr. 26 (P-172)[1171], 2. Februar 1983; & JP-A-57 179 656 (MITSUBISHI JUKOGYO K.K.) 05-11-1982**

(73) Patentinhaber: **Institut Dr. Friedrich Förster Prüfgerätebau GmbH & Co. KG**
**Postfach 1564 In Laisen 70**
**W-7410 Reutlingen 1(DE)**

(72) Erfinder: **Pfisterer, Helmut**
**Barkhorstrücken 3B**
**W-4300 Essen 16(DE)**
Erfinder: **Schütze, Wolfgang**
**Ebereschenweg 22**
**W-4200 Oberhausen 11(DE)**
Erfinder: **Wezel, Heinz**
**Erlenbachstrasse 38**
**W-7410 Reutlingen 25(DE)**

## Beschreibung

Die Erfindung betrifft ein Verfahren zum Untersuchen des Zustandes von Bereichen eines Objektes, inbesondere eines Kraftfahrzeuges, gemäß dem Oberbegriff des Patentanspruchs 1. Ein solches Verfahren kann Anwendung finden bei den Untersuchungen an tragenden Teilen von Kraftfahrzeugen auf Korrosionsschäden, wie sie z.B. von Technischen Überwachungsvereinen periodisch durchgeführt werden. Schäden dieser Art sind meist unsichtbar oder schwer erkennbar, da sie von Schutzschichten wie Lack oder Unterbodenschutz überzogen sind beziehungsweise von Schmutz bedeckt sein können. Bei der Durchführung der Untersuchungen kommen vielfach Schaber und Hammer zum Einsatz. Durch Wegschaben der Deckschicht kann die Oberfläche der Trägerschicht freigelegt und der Inaugenscheinnahme zugänglich gemacht werden. Leichte Hammerschläge oder ein Druck mit der Schaberspitze erlauben dem erfahrenen Prüfer in gewissem Umgang eine Beurteilung der verbliebenen Tragfähigkeit der zu untersuchenden Bereiche. Angesichts in anderen Fachgebieten eingesetzter zerstörungsfreier Prüfverfahren ist der Wunsch nach dem Einsatz solcher Techniken laut geworden, mit deren Hilfe eine Untersuchung ohne Zerstörung der Deckschicht möglich ist.

Aus Patentanmeldung GB-A-2 108 672 ist ein Gerät zum Feststellen von Reparaturstellen im Stahlblech von Fahrzeugkarosserien bekannt. Es besitzt eine Hallsonde und einen hinter dieser montierten Magnet, dessen Magnetfluß durch die Sonde in das Stahlblech der Karosserie eintritt. Drei verschiedene Lampensignale, gesteuert von unterschiedlichen Pegeln der Sondenspannung sollen anzeigen, ob das Stahlblech von der Sonde nur durch die dünne Lackschicht schicht getrennt ist, ob zusätzlich eine Füllerschicht aus nichtmagnetischem Material zum Einsatz kam oder ob das ferromagnetische Material des Stahlbleches unter der Sonde ganz fehlt, beziehungsweise durch eine dickere Füllerschicht von der Sonde beabstandet ist. Obwohl eine solche Einrichtung für den genannten speziellen Einsatzfall hilfreich sein kann, erweist sie sich doch im allgemeinen als unzureichend, da sie lediglich eine Aussage über den Abstand zwischen Sonde und ferromagnetischem Material macht, nicht jedoch über die physikalischen Eigenschaften des Letzteren.

In der Offenlegungsschrift DE-A-2 943 584 ist eine Vorrichtung zum Erkennen von Ungleichmäßigkeiten eine durch eine nichtmetallische Deckschicht abgedeckten metallischen Unterschicht beschrieben. Diese arbeitet mit einem auf die Deckschicht aufgesetzten Wirbelstromfühler, der auf Abstandsänderungen der metallischen Unterschicht anspricht. Eine im Fühler untergebrachte Spule bildet zusammen mit einem Kondensator einen Parallelschwingkreis, der an einen Oszillator angeschlossen ist. Rückwirkungen von Wirbelströmen in der metallischen Unterschicht auf die Spule bestimmen die Amplitude der Oszillatorspannung. Da diese Rückwirkungen umso stärker sind, je geringer der Abstand zwischen Spule und Unterschicht wird, kann die Oszillatorspannung als Maß für diesen Abstand genommen werden und durch ein Meßgerät oder, in Verbindung mit Schwellenschaltern, durch optische Signale angezeigt werden.

Gegenüber dem zuvor beschriebenen Gerät hat die Vorrichtung den Vorteil, daß sie auch bei nichtferromagnetischen Metallen eingesetzt werden kann. Der oben genannte Nachteil, daß außer dem Abstand zur Unterschicht keine Informationen gewonnen werden können, gilt auch hier im vollen Umfang.

Die Erfindung stellt sich daher ein Verfahren zur Aufgabe, mit dem es möglich wird, außer Aussagen über dem Abstand zwischen Tastspule und Trägerschicht auch noch Aussagen über Materialeigenschaften der Trägerschicht oder einer an deren Stelle eingefügten Ersatzschicht zu machen.

Diese Aufgabe wird gelöst durch ein Verfahren, das gemäß Patentanspruch 1 gekennzeichnet ist.

Für die erfindungsgemäße Lösung war eine Serie von umfangreichen Untersuchungen die Voraussetzung. Dabei bestätigte sich die anfangs gefaßte Vermutung, daß die Auswertung der komplexen Signalspannung eine Möglichkeit zur Trennung nach Materialeigenschaften der Trägerschicht bieten würde. Auch stellte sich überraschenderweise heraus, daß die Trennung innerhalb der komplexen Ebene bei geeigneter Frequenz in einer Richtung erfolgen kann, die in einem stumpfen Winkel, bzw. fast senkrecht zur früher ausschließlich benutzten Abstandsrichtung verläuft. Dies erleichtert eine wirksame Trennung erheblich. Als Trennlinien benachbarter Anzeigefelder Abhebekurven von Bereichen mit bestimmten Materialeigenschaften benutzt werden. Weitere vorteilhafte Ausgestaltungen der Erfindung sind in den Unteransprüchen angegeben.

Im folgenden soll die Erfindung an Hand einiger Figuren und durch ein Anwendungsbeispiel näher erläutert werden. Es zeigen im einzelnen:

Figur 1    eine Tastspulenanordnung

Figur 2    einen Ausschnitt aus der komplexen Ebene

Figur 3    Anzeigefelder in der komplexen Ebene

Figur 4    ein Blockschaltbild einer Anordnung zum Ausführen des erfindungsgemäßen Verfahrens

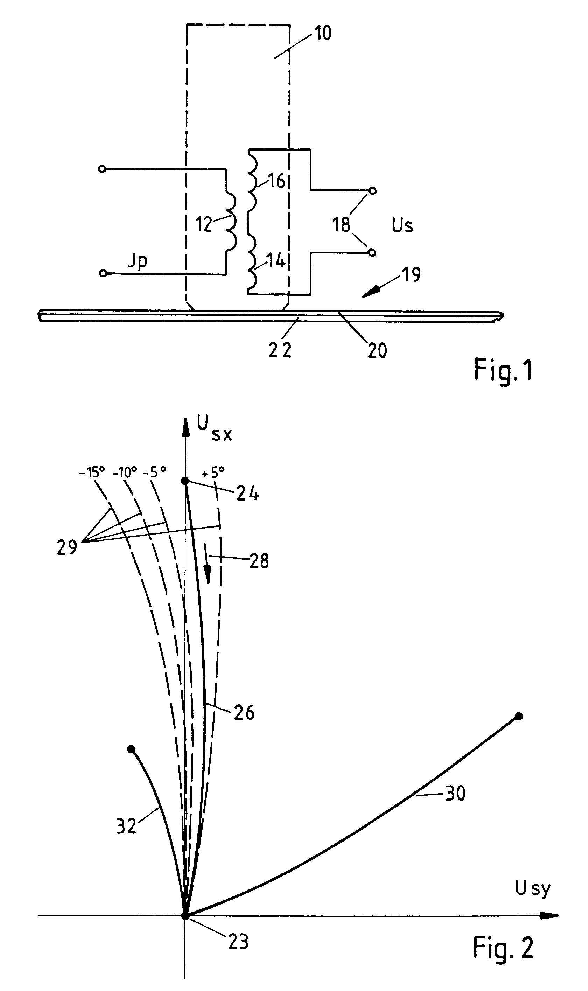

In Figur 1 ist der prinzipielle Aufbau einer Wirbelstromtastspule 10 dargestellt, wie sie im vorliegenden Fall eingesetzt werden kann. Es handelt sich dabei um einen sekundärseitig in Differenz geschalteten transformatorischen Geber. Andere Formen von Gebern sind jedoch für den erfindungsgemäßen Einsatzfall ebenso denkbar.

Die Tastspule 10 besitzt neben einer Primärwicklung 12 zwei Sekundärwicklungen 14, 16, die gleiche Windungszahlen aufweisen, symmetrisch zur Primärwicklung 12 angeordnet und gegensinnig hintereinander geschaltet sind. Befindet sich die Tastspule 10 in genügend weitem Abstand von elektrisch leitenden oder ferromagnetischen Teilen, so induziert ein Strom Jp durch die Primärwicklung 12 in den beiden Sekundärwicklungen 14, 16 gleiche, sich also heraushebende Spannungen, so daß sich an den Klemmen 18 eine Ausgangsspannung Null ergibt. Setzt man jedoch die Tastspule 10 auf die Oberfläche eines zu untersuchenden Bereiches 19 auf, im vorliegenden Beispiel eines mit einer Lackschicht 20 bedeckten Stahlbleches 22, so durchdringen die Kraftlinien des vom Strom Jp hervorgerufenen Magnetfeldes das Blech 22 und erzeugen in ihm Wirbelströme. Diese induzieren wegen unterschiedlicher Abstände zu den Sekundärwicklngen 14, 16 in den Letzteren unterschiedliche Spannungen, so daß man an den Klemmen 18 der Sekundärwicklungen 14, 16 eine von Null abweichende Signalspannung Us erhält. Bei den im folgenden beschriebenen Untersuchungen wurde eine Meßfrequenz von 30 kHz eingesetzt.

In Figur 2 ist die komplexe Ebene der Signalspannung Us dargestellt mit den beiden Komponenten Usx und Usy als Koordinaten. Der Koordinatenursprung 23 entspricht der Signalspannung Null, die im abgehobenen Zustand der Tastspule 10 an den Klemmen 18 ansteht. Bei einer auf einen einwandfreien blanken Bereich eines Stahlbleches aufgesetzten Tastpule 10 befindet sich die Spitze des Vektors der Signalspannung Us am Punkt 24. Hebt man die Tastspule 10 von der Oberfläche ab, oder setzt man sie auf immer dicker werdende Lackschichten 20 auf, so wandert die Vektorspitze der Signalspannung Us vom Punkt 24 entlang der Kurve 26 in Richtung des Pfeiles 28 und gelangt schließlich, bei entsprechend großem Abstand zwischen Tastspule 10 und Stahlblech 22, zum Koordinatenursprung 23. Die Kurve 26 wird daher auch als Abhebekurve bezeichnet.

In einer ersten Untersuchungsserie wurden bei 200 Kraftfahrzeugen verschiedener Hersteller, Typen und Baujahre Messungen an jeweils 12 einwandreien, unkorrodierten Bereichen vorgenommen. Es zeigte sich, daß mit Ausnahme der Typen, bei denen bekanntermaßen feuerverzinktes Blech eingesetzt wird, praktisch alle Meßpunkte in der unmittelbaren Umgebung der Kurve 26 lagen. Zur besseren Einordnung der Meßpunkte hatte man zuvor durch Trennlinien 29, die Abhebekurven entsprechen und um Winkel von jeweils 5° gegeneinander beabstandet sind, in Streuzonen untereteilt. 97,25 % aller Meßpunkte befanden sich innerhalb der Trennlinien von ± 5°, 2,71 % der Meßpunkte zwischen den Trennlinien von - 5° und - 10° und nur 0,04 % zwischen den Trennlinien von + 5° und + 10°.

In einer weiteren Untersuchungsserie sind an 60 Bereichen von Kraftfahrzeugen, bei denen auf Grund visueller Untersuchungen Verdacht auf Korrosion bestand, Messungen durchgeführt worden. Im Anschluß daran wurden die entsprechenden Stellen in herkömmlicher Weise mit Schaber und Hammer sorgfältig untersucht. Dabei wurden zwei grundsätzlich verschiedene Verhaltensweisen festgestellt. War bei einer Reparatur voll durchgerosteter Stellen nichtferromagnetisches Metallblech (z.B. Aluminium) eingesetzt worden oder hatte man zu Reparaturzwecken das Stahlblech durch in heißen Zustand aufgebrachtes Verzinnungsmaterial (z.B. 35 % Zinn, 65 % Blei) bearbeitet, so lagen die entsprechenden Meßwerte der Signalspannung Us rechts von der Kurve 26. Für feuerverzinkte Bleche gilt das gleiche. Ein Beispiel für ein solches Verhalten zeigt Kurve 30. Ganz anders dagegen verhält sich korrodiertes Stahlblech wie z.B. aus Kurve 32 zu ersehen ist. Die Meßwerte der Signalspannung Us waren durchweg links der Kurve 26 zu finden. Bei leichten Anrostungen, die auch bei tragenden Teilen noch zulässig sind, befand sich die Streuzone der Meßwerte zwischen Kurve 26 und der Trennlinie von - 10°, bei stärkeren Anrostungen, Rostblasen und Durchrostungen lagen die Meßwerte mit großer Sicherheit links der Trennlinie von - 10°.

Weiterhin wurde bei 250 Kraftfahrzeugen an jeweils 12 Meßstellen tragender Bereiche der Unterseite die Dicke der Schutzschichten ermittelt. Es stellte sich heraus, daß bei 99,9 % aller Meßstellen eine Schichtdicke von weniger als 3 mm vorlag. Aus weiteren Messungen ergab sich, daß die Signalspannung Us bei einem Abstand von 3 mm auf einen Wert von etwa 15 % des Maximalwertes gemäß Punkt 24 zurückgeht.

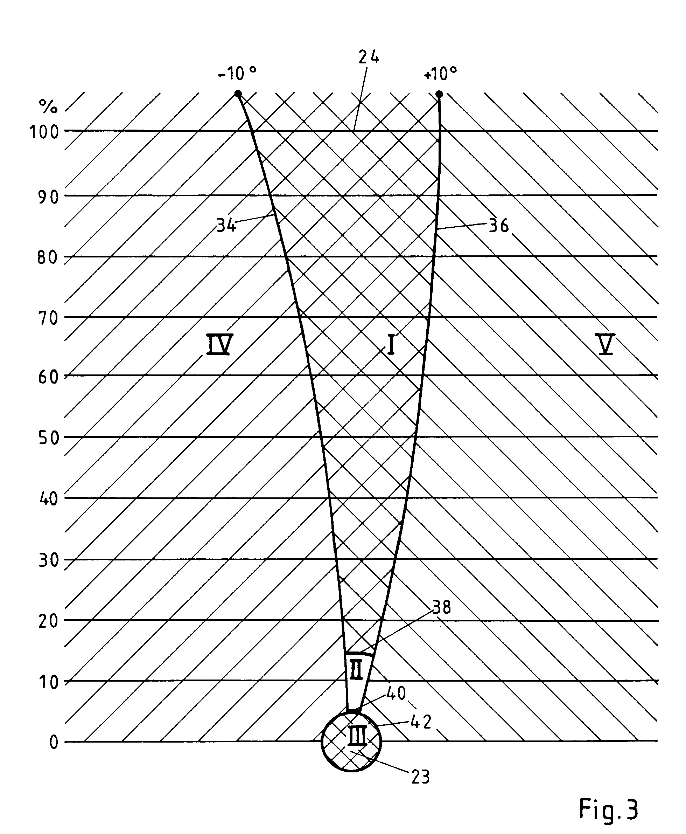

Mit diesen Informationen wurde es möglich, eine Unterteilung der komplexen Ebene der Signalspannung Us in fünf Anszeigefelder gemäß Figur 3 vorzunehmen, nachdem die Anzeigeebene, wie schon in Figur 2 gezeigt, durch zwei Punkte definiert war: Koordinatenursprung 23 bei abgehobener Tastspule 10 und Punkt 24 bei auf ein blankes Eichblech aufgesetzter Tastspule 10. Anzeigefeld I wird links und rechts begrenzt durch Grenzlinien 34 und 36, die Abhebekurven bei Winkeln von - 10° und + 10° entsprechen, während eine untere Grenzlinie 38 auf einen Materialabstand von 3 mm verlegt wurde. In das Anzeigefeld I fallen mithin alle Anzeigen, die bei intaktem material und bei Schutzschichtdicken von 0 bis 3 mm anfallen. Anzeigefeld II wird seitlich durch die Grenzlinien 34, 36, nach oben durch die Grenzlinie 38 und nach unten durch eine Grenzlinie 40 begrenzt, die bei einem Materialabstand von 6 mm liegt. In dieses Anzeigefeld fallen also Anzeigen von intaktem Material mit Schutzschichtdicken zwichen 3 und 6 mm. Ein Anzeigefeld III wird definiert durch eine kreisförmige Grenzlinie 42, die den Koordinatenursprung 23 als Mittelpunkt hat und die einen Radius entsprechend dem Abstand der Grenzlinie 40 zum Koordinatenursprung 23 aufweist. In das Anzeigefeld III fallen alle Anzeigen mit Schutzschichtdicken von mehr als 6 mm, die jedoch in der Praxis kaum vorkommen. In das gleiche Anzeigefeld fallen jedoch auch die Anzeigen von Füllstoffen aus elektrisch nichtleitendem Material. Als Anzeigefeld IV wird das Gebiet links der Grenzlinie 34 bezeichnet. Hierhin fallende Anzeigen müssen als von korrosionsverdächtigem Material herrührend eingestuft werden. Dagegen kann man bei Anzeigen im Anzeigefeld V, das rechts der Grenzlinie 36 liegt, davon ausgehen, daß sie von elektrisch leitendem, nichtferromagnetischem Fremdmaterial herrühren, soweit es sich nicht um feuerverzinkte Bleche handelt.

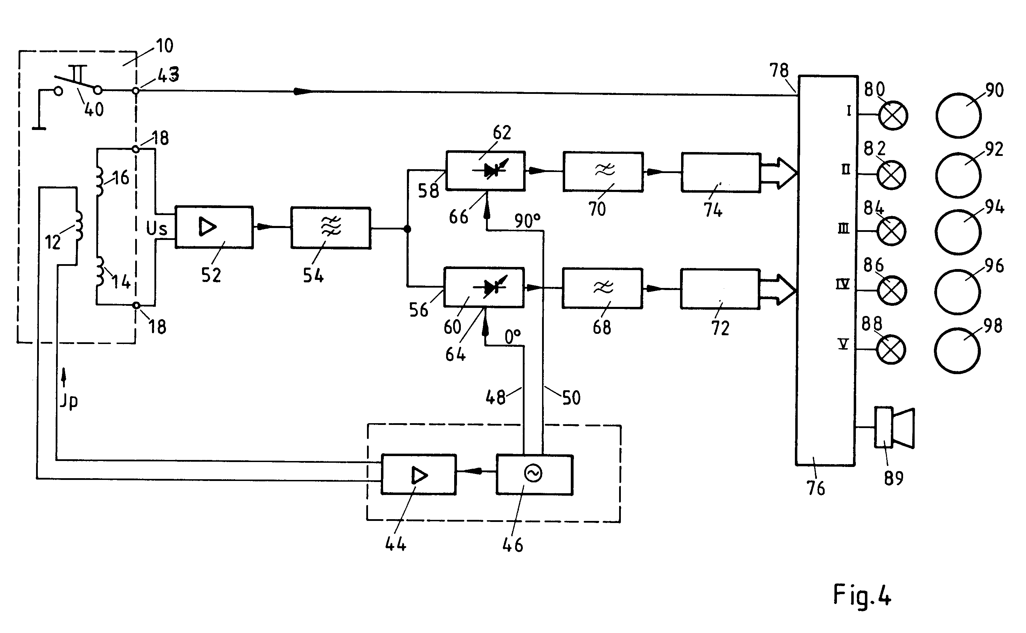

Figur 4 zeigt das Blockschaltbild einer Anordnung, mit deren Hilfe das erfindungsgemäße Verfahren ausgeführt werden kann, ohne daß dazu eine Darstellung der komplexen Signalspannungsebene auf einem Bildschirm notwendig ist. Tastspule 10 ist weitgehend gleich aufgebaut wie schon weiter oben an Hand von Figur 1 ausgeführt wurde. Zusätzlich ist jedoch ein Schalter 40 vorgesehen, dessen Stellung die Bereitschaft zur Messung meldet, indem sie erkennen läßt, daß die Tastspule 10 auf einen zu untersuchenden Bereich aufgesetzt ist. Im einfachsten Fall kann es sich dabei um einen Schalter handeln, de von der mit der Untersuchung betrauten Person von Hand betätigt wird. Ebenso gut ist jedoch auch ein Schalter 40 denkbar, dessen Kontakt beim Aufsetzen auf den zu untersuchenden Bereich automatisch geschlossen wird. In jedem Falle steht das sich ergebende Bereitschaftssignal an einer Ausgangsklemme 43 zur Verfügung.

Die Primärwicklung 12 der Tastspule 10 wird durch einen Leistungsverstärker 44 gespeist, der von einem Oszillator 46 mit einer Frequenz von 30 kHz ausgesteuert wird. Der Oszillator 46 hat zusätzlich Steuersignalausgänge mit den Phasenlagen 0° und 90°, die über Leitungen 48 und 50 nach außen geführt sind.

Die Signalspannung Us an den Klemmen 18 der beiden Sekundärwicklungen 14, 16 liegt am Eingang eines Vorverstärkers 52 und gelangt von dessen Ausgang über einen Bandpaß 54 zu den Signaleingängen 56, 58 zweier phasenselektiver Gleichrichter 60, 62, deren Steuereingänge 64, 66 durch die 0° und 90° Steuersignale des Oszillators 46 gesteuert werden. Die Ausgangsspannungen der phasenselektiven Gleichrichter 60, 62 werden in Tiefpässen 68, 70 geglättet. An den Ausgängen der beiden letzteren erhält man die Komponenten Usx und Usy der Signalspannung Us, die zur Darstellung der komplexen Signalspannungsebene gemäß den Figuren 2 und 3 am Bildschirm einer Bildröhre benutzt werden könnten. Statt dessen werden die beiden Komponenten Usx und Usy in zwei Analog-Digital-Konvertern 72, 74 digitalisiert und einer mikroprozessorgesteuerten Auswerteeinrichtung 76 zur Verfügung gestellt, mit deren Eingang 78 auch das Bereitschaftsignal aus Klemme 43 der Tastspule 10 verbunden ist. Die Auswerteeinrichtung 76 ist mit einem Speicherglied, z.B. einem RAM ausgerüstet, in das die Grenzlinien 34 - 42 gemäß Figur 3 eingespeichert worden sind. Bei Vorliegen des Bereitschaftssignals am Eingang 78 wird die komplexe Signalspannung Us in Form ihrer beiden Komponenten Usx und Usy mit den gespeicherten Grenzlinien 34 - 42 verglichen. Dem Ergebnis dieses Vergleichs entsprechend wird die jeweils vorliegende Signalspannung einem der Anzeigefelder I - V zugeordnet. Dies wird durch eine der Lampen 80 - 88 angezeigt. Ein zusätzliches akustisches signal kann durch einen akustischen Signalgeber 89 übermittelt werden.

Zur Funktionskontrolle sind fünf Kontrollplättchen 90 - 98 vorgesehen, die jeweils in der Nachbarschaft einer der Lampen 80 - 88 angordnet sind. In den Kontrollplättchen sind jeweils die physikalischen Eigenschaften simuliert, deren Vorhandensein an den zu untersuchenden Bereichen durch die jeweils benachbarte Lampe angezeigt werden soll. Bei Aufsetzen der Tastspule 10 auf die kontrollplättchen 90 - 98 muß die jeweils zugehörige Lampe aufleuchten.

**Patentansprüche**

1.   Verfahren zum Untersuchen des Zustandes von Bereichen (19) eines Objektes - insbesondere eines Kraftfahrzeuges -, das aus einer Trägerschicht (22) aus elektrisch leitendem und/ oder ferromagnetischem Material einerseits und aus einer Deckschicht (20) aus elektrisch nicht leitendem Material andererseits zusammengesetzt ist, bei dem eine Tastspule (10) auf die Oberfläche der Bereiche (19) aufgesetzt wird, bei dem durch die Tastspule (10) ein Wechselstrom geschickt wird, der ein magnetisches Wechselfeld vorgewählter Frequenz unter der Tastspule (10) erzeugt und mit diesem Wechselfeld Wirbelströme in der Trägerschicht (22) hervorruft, bei dem ferner in der Tastspule (10) eine komplexe Signalspannung (Us) abgeleitet wird, die auf Wechselwirkungen der Wirbelströme mit der Tastspule (10) beruht, dadurch gekennzeichnet,

daß ermittelt wird, in welchem von drei Anzeigefeldern (I, IV, V) der komplexen Ebene der Signalspannung (Us) die jeweils vorliegende Signalspannung liegt,

wobei die drei Anzeigefelder durch zwei Trennlinien (34 , 36) gebildet werden, die jeweils einen eine Streuzone definierenden Winkel +/- α von einer solchen Kurve, die beim Ab-heben der Tastspule (10) von der Oberfläche eines Bereiches (19) einer intakten blanken Trägerschicht (22) von der Spitze des Vektors der Signalspannung (Us) an durchlaufen wird, beabstandet ist, und

daß, je nachdem, in welchem Anzeigefeld die Signalspannung liegt, ein bestimmtes optisches und/oder akustisches Anzeigesignal (80-89) erzeugt wird.

2. Verfahren nach Anspruch 1, dadurch gekennzeichnet,

daß zur Anzeige von Schutzschichten ab einer gewissen Tiefe ein weiteres Anzeigefeld (III) benutzt wird, das sich kreisflächenförmig um den im abgehobenen Zustand der Tastspule (10) sich ergebenden Ausgangspunkt (23) erstreckt, mit dem genannten Ausgangspunkt (23) als Mittelpunkt und mit einem Radius, der entsprechend der anzuzeigenden Schutzschichtdicke gewählt ist.

3. Verfahren nach einem der vorhergehenden Ansprüche, dadurch gekennzeichnet,

daß die Anzeigesignale ausgelöst werden durch ein Bereitschaftssignal, das das Aufsetzen der Tastspule (10) auf den zu untersuchenden Bereich (19) meldet.

4. Verfahren nach Anspruch 3, dadurch gekennzeichnet,

daß das Bereitschaftssignal automatisch beim Aufsetzen der Tastspule (10) erzeugt wird.

5. Verfahren nach Anspruch 3, dadurch gekennzeichnet,

daß das Bereitschaftssignal von der die Untersuchung durchführenden Person durch Betätigen eines Schalters (40) ausgelöst wird.

6. Verfahren nach einem der vorhergehenden Ansprüche, dadurch gekennzeichnet,

daß zum Aufteilen der komplexen Ebene der Signalspannung in Anzeigefelder (I - V) und zum Zuordnen der optischen und/ oder akustischen Signale eine mikroprozessorgesteuerte Auswerteeinheit (76) benutzt wird.

7. Verfahren nach einem der vorhergehenden Ansprüche, dadurch gekennzeichnet,

daß Kontrollplättchen (90 - 98), die die gleichen Eigenschaften aufweisen, wie die den Anzeigebereichen (I - V) zugeordneten Materialien, auf die Tastspule (10) zur Funktionskontrolle aufgesetzt werden.

8. Verfahren nach Anspruch 7, dadurch gekennzeichnet,

daß die Kontrollplättchen (90 - 98) jeweils in der Nachbarschaft der zugehörigen optischen Signalgeber (80 - 88) angeordnet sind.

9. Verfahren nach einem der vorhergehenden Ansprüche, dadurch gekennzeichnet,

daß eine Prüffrequenz von etwa 30 kHz eingesetzt wird.

**Claims**

1. Method for testing the state of areas (19) of an object, in particular of a motor vehicle, which is composed of a supporting layer (22) of electrically conductive and/or ferromagnetic material, on the one hand, and a covering layer (20) of electrically non-conductive material, on the other hand, wherein a search coil (10) is placed on the surface of the areas (19), an alternating current is sent through the search coil (10) and produces an alternating magnetic field of preselected frequency under the search coil (10) and causes eddy currents in the supporting layer (22) with this alternating field, and wherein, moreover, a complex signal voltage (Us) is derived in the search coil (10) which is based on interactions of the eddy currents with the search coil (10), characterised in that it is determined in which of three indication fields (I, IV, V) of the complex plane of the signal voltage (Us) the signal voltage present at any given time lies, the three indication fields being formed by two dividing lines (34, 36) which in each case is distant an angle +/- α defining a spread zone from a curve which is run through from the peak of the vector of the signal voltage (Us) on when the search coil (10) is removed from the surface of an area (19) of an intact bare supporting layer (22), and, depending upon the indication field in which the signal voltage lies, a specific optical and/or acoustic indication signal (80-89) is produced.

2. Method according to claim 1, characterised in that for indicating protective layers from a certain depth on, an additional indication field (III) is used which extends in the form of a circular area around the starting point (23) resulting in the removed state of the search coil (10), with the said starting point (23) as the centre and with a radius chosen according to the protective layer thickness to be indicated.

3. Method according to either one of the preceding claims, characterised in that the indication signals are triggered by a readiness signal which announces the placing of the search coil (10) on the area (19) to be tested.

4. Method according to claim 3, characterised in that the readiness signal is generated automatically on the placing-on of the search coil (10).

5. Method according to claim 3, characterised in that the readiness signal is triggered by the person carrying out the test by operating a switch (40).

6. Method according to any one of the preceding claims, characeried in that a microprocessor-controlled evaluating unit is used for dividing the complex plane of the signal voltage into indication fields (I - V) and for assigning the optical and/or acoustic signals.

7. Method according to any one of the preceding claims, characterised in that monitoring discs (90 - 98) which have the same properties as the materials associated with the indication fields (I - V) are placed on the search coil (10) for function monitoring.

8. Method according to claim 7, characterised in that the monitoring discs (90 - 98) are arranged in each case in the vicinity of the associated optical signalling devices (80 - 88).

9. Method according to any one of the preceding claims, characterised in that a test frequency of about 30 kHz is used.

**Revendications**

1. Procédé pour inspecter l'état de zones (19) d'un objet - en particulier d'un véhicule automobile - qui est constitué, d'une part, par une couche de support (22) d'un matériau électriquement conducteur et/ou ferromagnétique et, d'autre part, d'une couche de couverture (20) d'un matériau non conducteur électriquement, dans lequel une bobine de palpage (10) est placée sur la surface des zones (19), dans lequel un courant alternatif qui produit un champ alternatif magnétique de fréquence présélectionnée, sous la bobine de palpage (10), est envoyé à travers celle-ci et provoque avec ce champ magnétique des courants de Foucault dans la couche de support (22), dans lequel en outre il est prélevé dans la bobine de palpage (10) un signal de tension (Us) complexe qui repose sur des interactions entre les courants de Foucault et la bobine de palpage (10), caractérisé
en ce que l'on détermine dans lequel de trois champs d'indication (I, IV, V) du plan complexe de la tension de signal (US) se situe la tension de signal reçue dans chaque cas,
les trois champs d'indication étant formés par deux lignes de séparation (34, 36) qui sont éloignées chacune d'un angle $+/-\alpha$, définissant une zone de dispersion, d'une courbe qui est traversée à partir de la pointe du vecteur de la tension de signal (Us), lorsque la bobine de palpage (10) est relevée de la surface d'une zone (19) d'une couche de support brillante (22), intacte, et
en ce que suivant le champ d'indication dans lequel se trouve la tension de signal, il est délivré un signal (80 à 89) déterminé, optique et/ou acoustique.

2. Procédé selon la revendication 1, caractérisé en ce que pour l'indication de couches de protection à partir d'une profondeur déterminée, on utilise un autre champ d'indication (III) qui s'étend sur une surface circulaire autour du point de départ (23) qui résulte à l'état relevé de la bobine de palpage (10), avec ce point de départ (23) comme centre et avec un rayon qui est choisi en fonction de l'épaisseur de la couche de protection à indiquer.

3. Procédé selon l'une des revendications précédentes, caractérisé en ce que les signaux d'indication sont déclenchés par un signal d'attente qui signale la mise en place de la bobine de palpage (10) sur la zone (19) à inspecter.

4. Procédé selon la revendication 3, caractérisé en ce que le signal d'attente est automatiquement produit lors de la mise en place de la bobine de palpage (10).

5. Procédé selon la revendication 3, caractérisé en ce que le signal d'attente est déclenché par la personne procédant à l'inspection, par actionnement d'un interrupteur (40).

6. Procédé selon l'une des revendications précédentes, caractérisé en ce que pour partager le plan complexe de la tension de signal dans les champs d'indication (I à V) et pour affecter les signaux optiques et/ou acoustiques, on utilise une unité d'analyse (67) commandée par microprocesseur.

7. Procédé selon l'une des revendications précédentes, caractérisé en ce que des plaquettes de contrôle (90 à 98) qui présentent les mêmes propriétés que les matériaux des zones d'indication (I à V), sont placées sur la bobine de palpage (10) pour le contrôle du fonctionnement.

8. Procédé selon la revendication 7, caractérisé en ce que les plaquettes de contrôle (90 à 98) sont placées chacune à proximité des transmetteurs de signaux optiques correspondants (80 à 88).

9. Procédé selon l'une des revendications précédentes, caractérisé en ce qu'on a recours à une fréquence d'essai d'environ 30 kHz.

Fig.1

Fig. 2

Fig.3

Fig.4

EP 0 296 417 B1